# EUROPÄISCHE PATENTSCHRIFT

(11) **EP 0 942 023 B1**
(45) Veröffentlichungstag und Bekanntmachung des Hinweises auf die Patenterteilung: **15.09.2004**
(21) Anmeldenummer: 99104105.4
(22) Anmeldetag: 01.03.1999
(51) Int. Cl.: C08G 18/70, C08G 18/80, C09D 175/04

(54) **Wässrige Polyisocyanatvernetzer mit Hydroxypivalinsäure und Dimethylpyrazol-Blockierung**
Aqueous polyisocyanate crosslinker with hydroxypivalic acid and blocked with dimethylpyrazole
Réticulant aqueux de polyisocyanate avec de l'acide hydroxypivalique et bloqué par le diméthylpyrazole

(30) Priorität: 12.03.1998 DE 19810660
(43) Veröffentlichungstag der Anmeldung: 15.09.1999
(73) Patentinhaber: Bayer MaterialScience AG, 51368 Leverkusen (DE)
(72) Erfinder: König, Eberhard, Dr., 51375 Leverkusen (DE); Müller, Heino, 51377 Leverkusen (DE); Blum, Harald, Dr., 51375 Leverkusen (DE); Petzoldt, Joachim, Dr., 40789 Monheim (DE)

(56) Entgegenhaltungen:
- EP-A- 0 566 953
- WO-A-97/12924
- US-A- 4 976 837
- US-A- 5 399 294

## Beschreibung

Die Erfindung betrifft wäßrige, mit Pyrazol-Ringverbindungen blockierte Polyisocyanat-Vernetzer, deren Herstellung und Verwendung als Klarlack- oder Füllerkomponente in der Automobillackierung.

Pyrazole, z.B. 3,5-Dimethylpyrazol, gehören zu den wenigen Isocyanatblockierungsmitteln, die in wäßriger Phase einerseits stabile, andererseits reaktive Vernetzer zu bilden vermögen. Beispielsweise vernetzt ein mit 3,5-Dimethylpyrazol blockiertes aliphatisches Polyisocyanat bereits bei Einbrennbedingungen von 30 Minuten /120 bis 130°C, wohingegen ein mit Butanonoxim blockiertes Polyisocyanat 30 Minuten / 140°C benötigt.

Mit Pyrazolen blockierte, wäßrige Polyisocyanat-Vernetzer werden z.B. in der WO 97/12924 beschreiben, wobei die Hydrophilierung dieser Vernetzer auf Polyhydroxycarbonsäuren beschränkt ist. Die Hydrophilierung durch den einfacheren Einbau von Monohydroxycarbonsäuren wird nicht genannt.

Aus der EP-A 576 952 und EP-A 566 953 ist bekannt, Hydroxypivalinsäure und mit ε-Caprolactam, Malonsäurediethylester, Acetessigsäureethylester, Oximen blockierte Polyisocyanate zur Herstellung wasserdispergierbarer Polyisocyanatgemische einzusetzen.

In der EP-A 802 210 werden ebenfalls wäßrige Polyisocyanat-Vernetzer mit einer 3,5-Dimethylpyrazol-Blockierung beschrieben. Die Hydrophilierung dieser Vernetzer erfolgt aber über nichtionische Polyethylenoxidketten. Es hat sich aber gezeigt, daß Lacke auf Basis dieser Vernetzer mit Polyethylenoxidketten eine bleibende Hydrophilierung besitzen und dadurch beispielsweise den Salzsprühtest nicht bestehen. Damit besitzen derartige Lacke für die Automobilindustrie eine ungenügende Korrosionsbeständigkeit.

Aufgabe der Erfindung ist es, die genannten Nachteile zu vermeiden und einen wäßrigen Polyisocyanatvernetzer mit guter Reaktivität, einfachem Aufbau und guter Korrosionsbeständigkeit zur Verfügung zu stellen.

Diese Aufgabe konnte mit den erfindungsgemäßen Polyisocyanat-Vernetzern gelöst werden.

Gegenstand der Erfindung sind wäßrige bzw. wasserverdünnbare blockierte Polyisocyanate aus
a) 100 Äquivalent-% einer Polyisocyanatkomponente,
b) 60 bis 85 Äquivalent-% einer Pyrazolringverbindung als Blockierungsmittel,
c) 15 bis 40 Äquivalent-% einer Monohydroxycarbonsäure als Hydrophilierungsmittel und gegebenenfalls
d) 0 bis 15 Äquivalent-% einer difunktionellen, HO- und/oder NH₂-Gruppen tragenden Kettenverlängerungskomponente,
wobei die Mengenverhältnisse der Reaktionspartner so gewählt werden, daß das Äquivalent-Verhältnis von NCO-Gruppen der Komponente a) zu gegenüber Isocyanaten reaktionsfähigen Gruppen der Komponente b), c) und d) bei 1:0,8 bis 1:1,2 liegt.

Gegenstand der Erfindung ist auch ein Verfahren zur Herstellung der Polyisocyanatvernetzer.

Die Herstellung der erfindungsgemäßen Polyisocyanat-Vernetzer erfolgt stufenweise, wobei die Polyisocyanatkomponente a) und gegebenenfalls 5 bis 10 Gew.-%, bezogen auf den Festkörper, eines wassermischbaren Lösungsmittels, z.B. N-Methylpyrrolidon, vorgelegt werden und in einer ersten Reaktionsstufe bei ca. 80°C ca. 50 Gew.-% der vorhandenen NCO-Gruppen mit dem Pyrazol-Blockierungsmittel umgesetzt wird und in einer weiteren Reaktionsstufe die Hydroxypivalinsäure eingebaut wird und schließlich der Rest der noch vorhandenen NCO-Gruppen mit weiterem Pyrazol-Blockierungsmittel abreagiert wird, wobei auf 100 Äquivalent-% an NCO-Gruppen der Komponente a) etwa 100 Äquivalent-% an reaktiven Gruppen der Komponenten b) und c) eingesetzt werden und anschließend mit einer Menge an Neutralisationsmittel, die ausreicht, um eine stabile Dispersion zu erhalten, die Carboxylgruppen ganz oder teilweise in Carboxylatgruppen überführt werden.

Gegenstand der Erfindung ist auch die Verwendung der wäßrigen oder wasserverdünnbaren blockierten Polyisocyanaate in Kombination mit in Wasser löslichen und/oder dispergierbaren Polyhydroxylverbindungen zur Herstellung von, gegebenenfalls die üblichen Hilfs- und Zusatzmittel der Beschichtungstechnologie enthaltenden, wäßrigen Einbrennlacken.

Bei den, den erfindungsgemäß blockierten Polyisocyanaten zugrundeliegenden Polyisocyanaten a), handelt es sich um an sich bekannte Lackpolyisocyanatae mit aliphatisch und/oder cycloaliphatisch gebundenen Isocyanatgruppen und einem Isocyanatgehalt von 7 bis 30, vorzugsweise 12 bis 25 Gew.-%. In Betracht kommen insbesondere die an sich bekannten Biuret-, Isocyanurat- und/oder Uretdiongruppen aufweisenden Lackpolyisocyanate auf Basis von 1,6-Diisocyanatohexan (HDI), 1-Isocyanato-3,3,5-trimethyl-5-isocyanatomethyl-cyclohexan (IPDI) und/oder Bis-(4-isocyanatocyclohexyl)-methan (H₁₂MDI).

Weiterhin können auch Polyisocyanate oder kurzkettige NCO-Prepolymere auf Basis von aromatischen Diisocyanaten, wie beispielsweise Diisocyanatotoluol (TDI) oder 4,4'-Diisocyanatodiphenylmethan (MDI) eingesetzt werden.

Besonders bevorzugt als Komponente a) sind jedoch Isocyanuratgruppen aufweisende Polyisocyanate auf Basis von HDI oder H₁₂MDI.

Als Blockierungskomponente kommen 1H-Pyrazole, wie z.B. Pyrazol, 3-Methylpyrazol oder 3,5-Dimethylpyrazol in Betracht. Bevorzugt ist 3,5-Dimethylpyrazol, das z.B. gut durch Kondensation von Hydrazinhydrat mit Acetylaceton zugänglich ist.

Als Hydrophilierungskomponente c) kommen vorzugsweise Monohydroxycarbonsäuren in Betracht, die eine oder zwei α-ständigen Methylgruppen tragen.

Besonders bevorzugt ist Hydroxyivalinsäure bzw. Hydroxymethyldimethylessigsäure (2-Hydroxymethyl-2-methylpropionsäure), gegebenenfalls in Gegenwart geringer Mengen anderer Hydrophilierungsreagenzien, wie z.B. 0,001 bis 0,1 Gew.-% OHfunktioneller hydrophiler Polyether oder Polyhydroxycarbonsäuren.

Als difunktionelle Kettenverlängerungskomponente d) kommen Diamine, Diole und auch Hydroxyamine im Molekulargewichtsbereich von 32 bis 300 in Betracht. Beispiele sind Hydrazin, Ethylendiamin, Isophorondiamin, das Bisketimin aus Isophorondiamin und Methylisobutylketon, 1,4-Dihydroxybutan, Ethanolamin, N-Methylethanolamin, Hydroxyethylethylendiamin, das Addukt von 2 mol Propylencarbonat und 1 mol Hydrazin der Formel

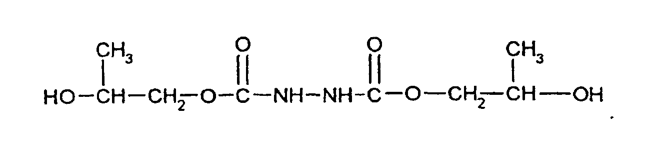

Geeignete Neutralisationsmittel sind z.B. Dimethylethanolamin, Methyldiethanolamin, Triethylamin, N-Methylmorpholin oder 2-Amino-2-Methylpropanol.

Um eine wäßrige Lösung bzw. Dispersion herzustellen, wird die obige warme Lösung der blockierten und hydrophilierten Komponente a) mit warmem, destilliertem Wasser versetzt und gerührt. Um einen bei Raumtemperatur lagerstabilen, wasserverdünnbaren, organisch gelösten Vernetzer herzustellen, muß der obige Ansatz mit weiterem Lösemittel verdünnt werden, um seine Viskosität zu senken.

Die erfindungsgemäßen Polyisocyanat-Vernetzer haben folgende Vorteile:
- Die Herstellbarkeit auch mit hochfunktionellen (Funktionalität 3-4) Polyisocyanatkomponenten a) ist relativ problemlos.
- Die Einbrennbedingungen liegen schon bei 30 Minuten 120 bis 130°C.
- Die Thermovergilbung ist deutlich niedriger als bei Polyisocyanat-Vernetzern, die mit Butanonoxim blockiert sind.

Der einfache Aufbau und die verbesserte Korrosionsschutzwirkung (Salzsprühtest) werden anhand der folgenden Beispiele demonstriert.

### Beispiele

### Beispiel 1

In diesem erfindungsgemäßen Beispiel sind 75 Äquivalent-% der vorhandenen NCO-Gruppen mit Dimethylpyrazol blockiert und 25 Äquivalent-% mit Hydroxypivalinsäure hydrophiliert. Ansatz

| | |
|---|---|
| 200,0 g (1,0 Val) | eines isocyanurathaltigen Lackpolyisocyanates auf Basis von 1,6-Diisocyanatohexan (HDI) mit einem NCO-Gehalt von ca. 21 %, einer Viskosität bei 23°C von ca. 3 000 mPas und einer Funktionalität von ca. 3,5 |
| 72,0 g (0,75 Val) | 3,5-Dimethylpyrazol |
| 29,5 g (0,25 Val) | Hydroxypivalinsäure |
| 22,2 g (0,25 mol) | Dimethylethanolamin |
| 30,0 g | N-Methylpyrrolidon |
| 422,3 g | Wasser |
| 776,0 g (0,75 Val) | blockierte NCO-Gruppen |

| | |
|---|---|
| Festkörpergehalt | (301,5 g) 38,9 % |
| Viskosität | ca. 2 000 mPas |
| blockierter NCO-Gehalt | 4,0 % |
| 1 Val block. NCO-Gruppen | 1 050 g |

### Durchführung:

Polyisocyanat, N-Methylpyrrolidin und eine Teilmenge von 48 g (0,5 mol) Dimethylpyrazol werden ca. 5 h bei 85°C umgesetzt, bis ein NCO-Gehalt im Bereich von 7,5 bis 7,7 % gemessen wird. Danach fügt man kristalline Hydroxypivalinsäure hinzu und rührt ca. 2 h 30 min bei ca 65°C nach, bis ein NCO-Gehalt von 3,4 % gefunden wird.

Anschließend gibt man die Restmenge von festem Dimethylpyrazol (24 g/0,25 mol) hinzu, rührt ca. 30 min bei 65°C nach und ermittelt IR-spektroskopisch keine freien NCO-Gruppen mehr. Unter Rühren neutralisiert man jetzt den Ansatz durch Zugabe von Dimethylethanolamin, tropft 70°C-warmes Wasser (entmineralisiert) hinzu und erhält eine blauschimmernde Dispersion (fast Lösung) eines blockierten Polyisocyanatvernetzers. Der blockierte NCO-Gehalt beträgt 4,0 %, sein blockiertes NCO-Äquivalent 1 050 g.

### Beispiel 2 (Vergleichsbeispiel)

Dieses Beispiel soll zeigen, daß es schwierig ist, mit einer Dihydroxycarbonsäure wie Dimethylolpropionsäure und einem hochfunktionellen Polyisocyanat (F mindestens 3,5) gemäß Beispiel 1 einen lagerstabilen, wasserdispergierten Polyisocyanatvernetzer herzustellen.

Anstelle von Hydroxypivalinsäure in Beispiel 1 werden 0,25 Val, entsprechend 16,75 g, Dimethylolpropionsäure eingesetzt und gemäß Beispiel 1 verarbeitet. Man erhält nach der letzten NCO-Messung eine hochviskose, fädenziehende Schmelze, fast Qualle, die sich nicht mehr dispergieren läßt.

### Beispiel 3 (Anwendungsbeispiel)

Dieses Beispiel demonstriert die Eigenschaften des erfindungsgemäßen Vernetzers gemäß Beispiel 1 im Vergleich zu einem handelsüblichen, mit Butanonoxim blockierten Polyisocyanatvernetzer in Klarlacken.

| **Klarlackrezeptur** | **1** | **2** |
|---|---|---|
| Bayhydrol VP LS 2017®, | 65,06 | 57,27 |
| Bayer AG, 42 %ige Lff. | | |
| Hydroxylpolyester-Dispersion | | |
| 1 Val OH = 1 889 g | | |
| Bayhydur BL 5140® | 32,89 | - |
| Bayer AG, 39,5 %ig L | | |
| Butanonoxim-blockiertes Polyisocyanat | | |
| 1 Val block. NCO = 955 g | | |
| Vernetzer gemäß Beispiel 1 | - | 31,35 |
| Additol XW 395®, | 0,72 | 0,69 |
| Vianova Resin, Verlaufsmittel | | |
| Surfinol 104 E®, | 0,72 | 0,69 |
| Air Product/Biesterfeld, | | |
| Antikratermittel | | |
| dest. Wasser | 0,61 | 10,00 |
| Gew.-Teile | 100,00 | 100,00 |
| Vernetzung block. NCO:OH=1:1 | | |
| Die Bindemittel und Additive werden mittels Rührer homogen vermischt und nach 2 Stunden verarbeitet | | |
| Festkörpergehalt | ca. 40 % | ca. 38 % |
| Auslaufzeit ISO-Becher 5 mm/23°C | ca. 40 s | ca. 38 s |
| Auslaufzeit nach 7 d 40°C Lacklagerung | ca. 34 s | ca. 31 s |
| Mit einer handelsüblichen Lackhantel wird auf Glasplatten ein Naßfilm von ca. 120 µm aufgetragen und nach einer Ablüftung von 10 min/23°C in einem Umluftofen 30 Minuten bei 120°C eingebrannt. | | |
| Pendelhärte n. König | ca. 7 s | ca. 19 s |
| 1 Minute Anlösbarkeit gegen Toluol, Methoxypropylacetat, Ethylacetat, Aceton (0 - 5, keine Markierung - zerstörter Film | 5 555 | 4 355 |
| Einbrennvorgang 30 min 140°C | ca. 32 s | ca. 38 s |
| Pendelhärte n. König | | |
| 1 Minute Anlösbarkeit, s.o. | 4 344 | 4 244 |
| Fur den Salzsprühtest werden die Lacke mittels Fließbecherpistole auf Stahlbleche gespritzt und 30 min bei 140°C eingebrannt | | |
| 144 h Salzsprühtest Din 53 167 [Wd* = Unterwanderung] | WD* 26 mm | Wd* 10 mm |

Man erkennt aus obiger Übersicht, daß der Lack 2 mit dem erfindungsgemäßen Vernetzer reaktiver als Lack 1 ist. Deutlich wird dies an der größeren Filmhärte und der besseren Resistenz gegen Anlösung bei der niedrigen Einbrenntemperatur von 120°C. Bei der Einbrenntemperatur von 140°C haben sich diese Verhältnisse angeglichen. Allerdings schneidet Lack 2 im Salzsprühtest mit einer Unterwanderung von nur 10 mm viel besser ab als Lack 1.

## Patentansprüche

1. Wäßrige bzw. wasserverdünnbare blockierte Polyisocyanate aus
a) 100 Äquivalent-% einer Polyisocyanatkomponente,
b) 60 bis 85 Äquivalent-% einer Pyrazolringverbindung als Blockierungsmittel,
c) 15 bis 40 Äquivalent-% einer Monohydroxycarbonsäure als Hydrophilierungsmittel und gegebenenfalls
d) 0 bis 15 Äquivalent-% einer difunktionellen, HO- und/oder NH₂-Gruppen tragenden Kettenverlängerungskomponente,
wobei die Mengenverhältnisse der Reaktionspartner so gewählt werden, daß das Äquivalent-Verhältnis von NCO-Gruppen der Komponente a) zu gegenüber Isocyanaten reaktionsfähigen Gruppen der Komponente b), c) und d) bei 1:0,8 bis 1:1,2 liegt.

2. Verfahren zur Herstellung der Polyisocyanat-Vernetzer nach Anspruch 1, wobei stufenweise die Polyisocyanatkomponente a) und gegebenenfalls 5 bis 10 Gew.-%, bezogen auf den Festkörper, eines wassermischbaren Lösungsmittels, z.B. N-Methylpyrrolidon, vorgelegt werden und in einer ersten Reaktionsstufe bei ca. 80°C ca. 50 Gew.-% der vorhandenen NCO-Gruppen mit dem Pyrazol-Blockierungsmittel umgesetzt wird und in einer weiteren Reaktionsstufe die Hydroxypivalinsäure eingebaut wird und schließlich der Rest der noch vorhandenen NCO-Gruppen mit weiterem Pyrazol-Blockierungsmittel abreagiert wird, wobei auf 100 Äquivalent-% an NCO-Gruppen der Komponente a) etwa 100 Äquivalent-% an reaktiven Gruppen der Komponenten b) und c) eingesetzt werden und anschließend mit einer Menge an Neutralisationsmittel, die ausreicht, um eine stabile Dispersion zu erhalten, die Carboxylgruppen ganz oder teilweise in Carboxylatgruppen überführt werden.

3. Verwendung der wäßrigen oder wasserverdünnbaren blockierten Polyisocyanate gemäß Anspruch 1 in Kombination mit in Wasser löslichen und/oder dispergierbaren Polyhydroxylverbindungen zur Herstellung von, gegebenenfalls die üblichen Hilfs- und Zusatzmittel der Beschichtungstechnologie enthaltenden, wäßrigen Einbrennlacken.

## Claims

1. Aqueous or water-dilutable blocked polyisocyanates formed from
a) 100 equivalent% of a polyisocyanate component,
b) from 60 to 85 equivalent% of a pyrazole ring compound as blocking agent,
c) from 15 to 40 equivalent% of a monohydroxycarboxylic acid as hydrophilicizing agent and optionally
d) from 0 to 15 equivalent% of a difunctional chain extender component carrying HO and/or NH₂ groups,
the proportions of the reactants being chosen such that the equivalent ratio of NCO groups of component a) to isocyanate-reactive groups of component b), c) and d) is from 1:0.8 to 1:1.2.

2. Process for preparing the polyisocyanate crosslinkers according to Claim 1, comprising the initial introduction in stages of the polyisocyanate component a) and optionally from 5 to 10% by weight, based on the solids, of a water-miscible solvent, e.g. N-methylpyrrolidone, and the reaction in a first reaction stage at approximately 80°C, of approximately 50% by weight of the existing NCO groups with the pyrazole blocking agent and the incorporation in a further reaction stage of the hydroxypivalic acid and finally the reaction of the remaining NCO groups with further pyrazole blocking agent, using about 100 equivalent% of reactive groups of components b) and c) to 100 equivalent% of NCO groups of component a) and subsequently the conversion of some or all of the carboxyl groups into carboxylate groups, using an amount of neutralising agent sufficient to give a stable dispersion.

3. Use of the aqueous or water-dilutable blocked polyisocyanates according to Claim 1 in combination with water-soluble and/or water-dispersible polyhydroxyl compounds for preparing aqueous baking enamels optionally comprising the customary auxiliaries and additives of coatings technology.

## Revendications

1. Polyisocyanates bloqués aqueux ou pouvant se diluer dans l'eau, obtenus à partir de
a) 100 % en équivalents d'un constituant polyisocyanate,
b) 60 à 85 % en équivalents d'un composé cyclique pyrazolique comme agent de blocage,
c) 15 à 40 % en équivalents d'un acide monohydroxycarboxylique comme agent d'hydrophilisation et éventuellement
d) 0 à 15 % en équivalents d'un agent d'allongement des chaînes difonctionnel portant des groupes OH et/ou NH₂,
les proportions des partenaires réactionnels étant choisies de manière que le rapport en équivalents des groupes NCO du constituant a) aux groupes réactifs avec les isocyanates des constituants b), c) et d) soit de 1:0,8 à 1:1,2.

2. Procédé de préparation des réticulants polyisocyanates selon la revendication 1, dans lequel, en procédant par étapes, on introduit le constituant polyisocyanate a) et éventuellement 5 à 10 % en masse, par rapport à la matière solide, d'un solvant miscible à l'eau, par exemple la N-méthylpyrrolidone, et, dans une première étape de réaction, on fait réagir à environ 80°C environ 50 % en masse des groupes NCO présents avec l'agent de blocage pyrazolique et, dans une autre étape de réaction, on incorpore l'acide hydroxypivalique, et on fait finalement réagir le reste des groupes NCO encore présents avec de l'agent de blocage pyrazolique supplémentaire, en utilisant pour 100 % en équivalents de groupes NCO du constituant a) environ 100 % en équivalents de groupes réactifs des constituants b) et c), et on transforme finalement, en totalité ou en partie, les groupes carboxyle en groupes carboxylates avec une quantité d'agent de neutralisation suffisante pour l'obtention d'une dispersion stable.

3. Utilisation des polyisocyanates bloqués aqueux ou pouvant se diluer dans l'eau selon la revendication 1 en combinaison avec des composés polyhydroxylés solubles dans l'eau et/ou pouvant se disperser dans l'eau pour la préparation de vernis thermodurcissables contenant éventuellement les agents auxiliaires et additifs classiques de la technologie des revêtements.
